# EUROPÄISCHE PATENTSCHRIFT

(11) **EP 3 742 144 B1**
(45) Veröffentlichungstag und Bekanntmachung des Hinweises auf die Patenterteilung: **16.03.2022**
(21) Anmeldenummer: 20175755.6
(22) Anmeldetag: 20.05.2020
(51) Int. Cl.: G01L 5/24, G01L 5/00

(54) **MESSEINRICHTUNG**
MEASURING DEVICE
APPAREIL DE MESURE

(30) Priorität: 22.05.2019 DE 102019113650
(43) Veröffentlichungstag der Anmeldung: 25.11.2020
(73) Patentinhaber: Accuride Wheels Solingen GmbH, 42697 Solingen (DE)
(72) Erfinder: GUMPERT, Sven, 53757 Sankt Augustin (DE); GEORGE, Dominique, 40699 Erkrath (DE)
(74) Vertreter: Meissner, Peter E.

(56) Entgegenhaltungen:
- CN-U- 208 282 986
- US-A- 3 354 705
- US-A1- 2003 145 657

## Beschreibung

Die Erfindung betrifft eine Messeinrichtung zur Ermittlung der aufgebrachten Radbolzenvorspannung und der Reaktionskräfte an den Anlageflächen für ein auf einer Radnabe zu montierendes Fahrzeugrad.

Es ist allgemein üblich, bei der Montage eines Rades an einem Fahrzeug die Radbolzen mit einem Drehmomentschlüssel anzuziehen.

Diese Methode eignet sich für die gängige Montage, macht es jedoch in der Regel notwendig, eine Überprüfung nach einer Anzahl von Fahrkilometern vorzunehmen.

Ein Grund hierfür ist, dass das Anziehen mit einem derartigen Schlüssel Ungenauigkeiten aufweisen kann, weil beispielsweise die Reibung des Bolzenkopfes im Gewinde unterschiedlich oder auch fehlerbehaftet sein kann. Nach einigen Fahrkilometern sollte sich das Rad im Rahmen eines eventuell vorhandenen Spiels ausgerichtet haben, so dass ein erneutes Anziehen mit einem Drehmomentschlüssel für einen korrekten Sitz an der Nabe sorgt.

Das Anziehen unter Drehmomentkontrolle bis zum Fügemoment und das Weiterschrauben unter Drehwinkelkontrolle vermindert den fehlerhaften Einfluss der Reibung, aber bei kurzen Bolzen muss der Drehwinkel genau eingehalten werden.

Beim streckgrenzengesteuerten Verschrauben, wo durch Vergleich von Drehmoment und Drehwinkel das Steifigkeitsverhalten des Bolzens gemessen wird, muss der Reibungskoeffizient zwar nicht bekannt sein, aber er muss konstant sein. Bei den Radbolzen ist dies unter Umständen nicht der Fall.

Vorrichtungen zur Ermittlung einer in einen Radbolzen eingebrachten axialen Kraft gemäss dem Stand der Technik sind in CN208282986U und US3354705A offenbart.

Aufgabe der Erfindung ist es, eine Messeinrichtung zu schaffen, mit der es möglich ist, im Voraus die Werte festzulegen, die für eine korrekte Verschraubung eines Fahrzeugrades notwendig und einzuhalten sind.

Gelöst wird diese Aufgabe erfindungsgemäß mit einer Messeinrichtung zur Ermittlung der aufgebrachten Radbolzenvorspannung und der Reaktionskräfte an den Anlageflächen für ein auf einer Radnabe zu montierendes Fahrzeugrad,
gekennzeichnet durch,
- einen auf einem Drehteller montierten Prüfkopf mit einer Druckglocke, an der eine ringförmige horizontale Auflagefläche für die äußere, den Bolzenlochkreis umgebende, Anlagefläche der Radschüssel vorgesehen ist,
- durch einen konzentrisch in der Druckglocke angeordneten Druckstempel, der eine horizontale Auflagefläche für die innere, die Nabenrand umgebende Anlagefläche der Radschüssel aufweist, wobei beide Auflageflächen sich in einer Ebene befinden,
- durch eine der Anzahl der Radbolzenöffnung des Rades entsprechenden, im Inneren der Druckglocke, zur Radbolzenöffnung ausgerichtete, radial zum Druckstempel verschiebbare, Zugkraftaufnehmer, die ein Innengewinde zur Aufnahme der durch die Radbolzenöffnung von außen eingeführten Radbolzen aufweisen,
- durch eine dem Druckstempel und der Druckglocke zugeordnete Doppelkraftmesseinrichtung,
- und durch einen außerhalb der Druckglocke angeordneten, mit der Radbolzenöffnung ausrichtbaren, einen Radbolzen aufnehmenden und diesen in das Gewinde des Zugkraftaufnehmers einschraubenden Messkopf, der einen Sensor zur Bestimmung des Drehwinkels und Drehmoments beim Einschrauben des Radbolzens aufweist.

Ausgestaltungen ergeben sich aus den Unteransprüchen.

Bei der Erfindung handelt es sich um eine Messmaschine zur Messung aller für die Radverschraubung am Fahrzeug relevanten Kräfte.

Hierzu wird ein definiertes Anzugsdrehmoment auf jeden Radbolzen aufgebracht. Die daraus resultierende axiale Vorspannkraft in dem Bolzen wird gemessen. Der benötigte Verdrehwinkel an jedem Radbolzen wird erfasst und gespeichert.

Gleichzeitig werden die durch das Rad im Bereich der Anlageflächen übertragenen Kräfte auf eine Messnabe gemessen. Dies geschieht für die innere und äußere Anlagefläche separat. Zur Berechnung weiterer Parameter kann auch die in dem Radbolzen entstehende Torsionsspannung gemessen werden.

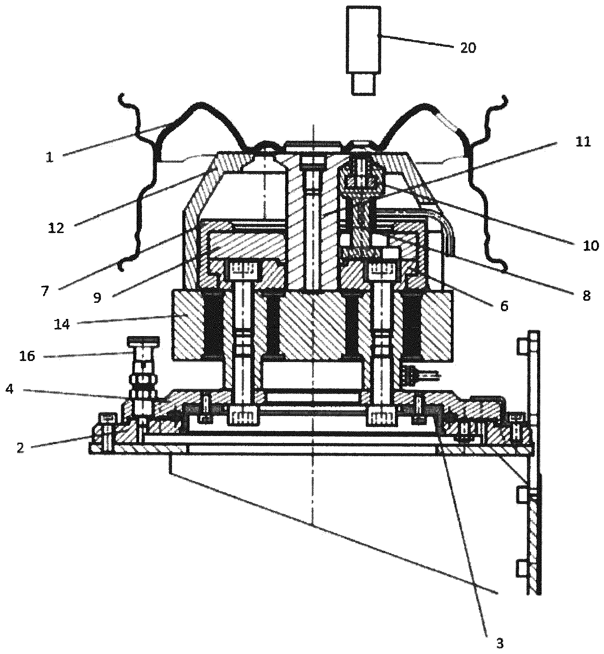

Der gesamte Vorgang einer Messung wird über einen Rechner je nach Untersuchungszweck gesteuert und die Messwerte permanent erfasst und nach Bedarf abgespeichert. Die erfindungsgemäße Messeinrichtung soll nachfolgend mit Bezug auf die Zeichnung erläutert werden.

Hierzu ist ein Schnitt durch die Messeinrichtung dargestellt, wobei im Einzelnen mit
- 1: eine Radschüssel
- 2: die Basisplatte
- 3: eine Führung
- 4: der Drehteller
- 6: die Verankerung für den Zugkraftaufnehmer (Unterteil)
- 7: ein Spannring
- 8: ein Zugkraftaufnehmer
- 9: Verankerung Zugkraftaufnehmer (Oberteil)
- 10: dem Gewindeeinsatz für den Radbolzen
- 11: dem Druckstempel für die innere Anlagefläche
- 12: die Druckglocke für die äußere Anlagefläche
- 14: die Doppelkraftmesseinrichtung mitAußen- und Innenring und
- 16: die Arretierung des Drehtellers
- 20: der Messkopf mit integriertem Sensor zur Bestimmung des Drehwinkels und des

Drehmomentes beim Einschrauben des Radbolzens in den Gewindeeinsatz 10
bezeichnet ist.

Die Funktionsweise der erfindungsgemäßen Messeinrichtung ist die Folgende:
Zuerst wird die zu messende Radschüssel 1 auf den Prüfkopf aufgelegt, und zwar so wie in der Zeichnung dargestellt, d.h. die äußere, den Bolzenlochkreis umgebende Anlagefläche der Radschüssel kommt auf der horizontalen Auflagefläche der Druckglocke zur Anlage, während die Innere, den Nabenrand umgebende Anlagefläche der Radschüssel auf der Auflagefläche des Druckstempels aufliegt. Die Auflagefläche des Druckstempels befindet sich in einer oberen Öffnung der Druckglocke bzw. ragt in diese Öffnung rein.

Mittels des Messkopfes 20 wird dann jeder Radbolzen durch sein Bolzenloch der Radschüssel in das austauschbare Innengewinde 10 eines der Zugkraftaufnehmer eingeschraubt und angezogen. Dabei wird sowohl das Drehmoment wie auch der Drehwinkel erfasst. Die hierbei in jede Radschraube eingebrachte Axialkraft sowie Torsionskraft wird gemessen und gespeichert.

Mittels der Doppelkraftmesseinrichtung 14 werden die durch die Radschüssel im Bereich der Anlageflächen auf die Druckglocke bzw. den Druckstempel übertragenen Kräfte ermittelt und der Auswertung zugeführt.

## Patentansprüche

1. Messeinrichtung zur Ermittlung der aufgebrachten Radbolzenvorspannung und der Reaktionskräfte an den Anlageflächen für ein auf einer Radnabe zu montierendes Fahrzeugrad, umfassend,
- einen auf einem Drehteller (4) montierten Prüfkopf mit einer Druckglocke (12), an der eine ringförmige horizontale Auflagefläche für die äußere, den Bolzenlochkreis umgebende, Anlagefläche der Radschüssel (1) vorgesehen ist,
- einen konzentrisch in der Druckglocke (12) angeordneten Druckstempel (11), der eine horizontale Auflagefläche für die innere, die Nabenrand umgebende Anlagefläche der Radschüssel (1) aufweist, wobei beide Auflageflächen sich in einer Ebene befinden,
- eine der Anzahl der Radbolzenöffnung des Rades entsprechenden, im Inneren der Druckglocke (12), zur Radbolzenöffnung ausgerichtete, radial zum Druckstempel verschiebbare, Zugkraftaufnehmer (8), die ein Innengewinde (10) zur Aufnahme der durch die Radbolzenöffnung von außen eingeführten Radbolzen aufweisen,
- eine dem Druckstempel (11) und der Druckglocke (12) zugeordnete Doppelkraftmesseinrichtung (14),
- und einen außerhalb der Druckglocke angeordneten, mit der Radbolzenöffnung ausrichtbaren, einen Radbolzen aufnehmenden und diesen in das Gewinde des Zugkraftaufnehmers (8) einschraubenden Messkopf (20), der einen Sensor zur Bestimmung des Drehwinkels und Drehmoments beim Einschrauben des Radbolzens aufweist.

2. Messeinrichtung nach Anspruch 1,
**dadurch gekennzeichnet,**
**dass** die Innengewinde (10) zur Anpassung an die jeweiligen Radbolzendimensionen austauschbar in den Zugkraftaufnehmer (8) angeordnet sind.

3. Messeinrichtung nach einem der vorstehenden Ansprüche,
**dadurch gekennzeichnet,**
**dass** die Zugkraftaufnehmer (8) in ihrer radialen Position in Relation zur Rotationsachse des Rades zur Anpassung an den Radbefestigungslochkreis verschiebbar sind.

4. Messeinrichtung nach einem der vorstehenden Ansprüche,
**dadurch gekennzeichnet,**
**dass** die Verankerung für den Zugkraftaufnehmer (Unterteil) (6) und die Verankerung für den Zugkraftaufnehmer (Oberteil) des Zugkraftaufnehmers (8) durch einen formschlüssigen geteilten Spannring (7) bewirkt ist.

## Claims

1. Measuring device for determining the applied wheel bolt pretension and the reaction forces on the bearing surfaces for a vehicle wheel which is to be mounted on a wheel hub, comprising
- a test head mounted on a rotation plate (4), having a pressure dome (12) on which an annular horizontal bearing surface for the outer bearing surface of the wheel dish (1) which surrounds the bolt hole circle is provided,
- a pressure piston (11) which is disposed concentrically in the pressure dome (12) and has a horizontal bearing surface for the inner bearing surface of the wheel dish (1) which surrounds the hub edge, both bearing surfaces being situated in one plane,
- a tensile force receiver (8) which corresponds to the number of wheel bolt openings of the wheel, is orientated in the interior of the pressure dome (12) relative to the wheel bolt opening and is displaceable radially relative to the pressure piston, which tensile force receivers have an inner thread (10) for receiving the wheel bolts which are introduced through the wheel bolt opening from the outside,
- a double force measuring device (14) which is assigned to the pressure piston (11) and to the pressure dome (12),
- and a measuring head (20) which is disposed outside the pressure dome, can be orientated with the wheel bolt opening, receives a wheel bolt and screws the latter into the thread of the tensile force receiver (8), which measuring head has a sensor for determining the angle of rotation and torque during screwing-in of the wheel bolt.

2. Measuring device according to claim 1,
**characterised in that**
the inner threads (10) are disposed exchangeably in the tensile force receiver (8) for adaptation to the respective wheel bolt dimensions.

3. Measuring device according to one of the preceding claims,
**characterised in that**
the tensile force receivers (8) are displaceable in the radial position thereof in relation to the axis of rotation of the wheel for adaptation to the wheel attachment hole circle.

4. Measuring device according to one of the preceding claims,
**characterised in that**
the anchoring for the tensile force receiver (lower part) (6) and the anchoring for the tensile force receiver (upper part) of the tensile force receiver (8) is effected by a form-fitting divided clamping ring (7).

## Revendications

1. Dispositif de mesure destiné à déterminer la précontrainte de boulons de roue et les forces de réaction appliquées sur les surfaces d'appui pour une roue de véhicule à monter sur un moyeu de roue, comprenant
- une tête de test montée sur un plateau tournant (4) et comportant une cloche de pression (12) sur laquelle est prévue une surface d'appui horizontale annulaire pour la surface d'appui extérieure du disque de roue (1), la surface d'appui extérieure entourant le cercle de boulonnage,
- un piston de pression (11) disposé de manière concentrique dans la cloche de pression (12), qui présente une surface d'appui horizontale pour la surface d'appui intérieure du disque de roue (1), la surface d'appui intérieure entourant le bord du moyeu et les deux surfaces d'appui se trouvant dans un même plan,
- un capteur de force de traction (8) correspondant au nombre de trous de boulon de roue de la roue, orienté à l'intérieur de la cloche de pression (12) vers le trou de boulon de roue et déplaçable radialement par rapport au piston de pression, qui présente un filetage intérieur (10) destiné à recevoir les boulons de roue introduits depuis l'extérieur par le trou de boulon de roue,
- un dispositif de mesure de force double (14) associé au piston de pression (11) et à la cloche de pression (12),
- et une tête de mesure (20) disposée à l'extérieur de la cloche de pression, pouvant être alignée avec le trou de boulon de roue, recevant un boulon de roue et vissant celui-ci dans le filetage du capteur de force de traction (8), qui présente un capteur pour déterminer l'angle de rotation et le couple lors du vissage du boulon de roue.

2. Dispositif de mesure selon la revendication 1,
**caractérisé en ce**
**que** les filetages intérieurs (10) sont disposés de manière interchangeable dans le capteur de force de traction (8) pour s'adapter aux dimensions respectives des boulons de roue.

3. Dispositif de mesure selon l'une des revendications précédentes,
**caractérisé en ce**
**que** les capteurs de force de traction (8) sont déplaçables dans leur position radiale par rapport à l'axe de rotation de la roue pour s'adapter au cercle de trous de fixation de la roue.

4. Dispositif de mesure selon l'une des revendications précédentes,
**caractérisé en ce**
**que** l'ancrage pour le capteur de force de traction (partie inférieure) (6) et l'ancrage pour le capteur de force de traction (partie supérieure) du capteur de force de traction (8) sont réalisés par une bague de serrage (7) en deux parties à complémentarité de forme.
